# EUROPEAN PATENT SPECIFICATION

(11) **EP 1 707 350 B1**
(45) Date of publication and mention of the grant of the patent: **16.05.2012**
(21) Application number: 06006314.6
(22) Date of filing: 27.03.2006
(51) Int. Cl.: B32B 1/08, B32B 25/04, F16L 11/04, F16L 11/08

(54) **Use of a rubber composition for forming an inner tube of a rubber hose for a fuel system**
Verwendung einer Gummizusammensetzung im Innenrohr eines Gummischlauchs für ein Kraftstoffsystem
Utilisation d'une composition à base de caoutchouc pour un tube interne d'un tuyau en caoutchouc pour un système à carburant

(30) Priority: 30.03.2005 JP 2005097621; 30.09.2005 JP 2005286250
(43) Date of publication of application: 04.10.2006
(73) Proprietor: TOYODA GOSEI CO., LTD., Nishikasugai-gun, Aichi-ken 452-8564 (JP)
(72) Inventor: Hasegawa, Shinji, Nishikasugai-gun Aichi 452-8564 (JP); Hayashi, Hidenori, Nishikasugai-gun Aichi 452-8564 (JP); Terada, Yohei, Nishikasugai-gun Aichi 452-8564 (JP)
(74) Representative: Kramer - Barske - Schmidtchen

(56) References cited:
- EP-A- 1 348 538
- WO-A-00/59999
- DE-A1- 4 129 023
- US-A- 4 606 952
- US-A- 5 068 137
- US-A- 5 077 108
- US-A- 5 187 232
- US-A- 6 047 740
- DATABASE WPI Section Ch, Week 198519 Derwent Publications Ltd., London, GB; Class A17, AN 1985-112801 XP002390869 & JP 60 053547 A (BRIDGESTONE TIRE KK) 27 March 1985 (1985-03-27)
- DATABASE WPI Section Ch, Week 198846 Derwent Publications Ltd., London, GB; Class A18, AN 1988-327618 XP002390868 & JP 63 242539 A (TOKAI RUBBER IND LTD) 7 October 1988 (1988-10-07)

## Description

### BACKGROUND OF THE INVENTION

### 1. Field of the Invention

This invention relates to the use of rubber compositions for forming an inner tube of rubber hoses for fuel systems through which fuel (fuel oil) passes, for example, inlet hoses, breather hoses and so on.

### 2. Related Art

As inner tube materials for rubber hoses for fuel systems, NBR (acrylonitrile-butadiene rubber), H-NBR (hydrogenated acrylonitrile-butadiene rubber) and FKM (fluororubber) have been mainly employed. For example, a heat-resistance fuel hose having an inner tube, which comprises an inner layer of the inner tube made of H-NBR and an outer layer of the inner tube made of an epoxy-crosslinked type ACM (acrylic rubber), is described in JP-A-2003-287162. Among these materials, FKM is free from deposition after immersing in fuel while NBR or H-NBR suffers from the deposition of fatty acid zinc salts after immersing in fuel. Although the deposition of the fatty acid zinc salts has been out of question hitherto, it is recently revealed as the major cause of jet nozzle clogging in common rail diesel engines having been widely distributed in these days. Such a jet nozzle has an extremely small jet port and the fatty acid zinc salts are gradually piled up in the nozzle and narrow the nozzle channel.

US 5,187,232 discloses rubber compounds of polychloroprene and hydrogenated nitrile rubber.

DE 41 29 023 A1 relates to a non-nitrosamine-toxic crosslinking system for EPDM rubber compositions.

DATABASE WPI Section Ch, Week 198519 Derwent Publications Ltd., London, GB; Class A17, AN 1985-112801 XP 002390869 & JP 60 053547 A relate to a rubber produced by vulcanising a rubber compound composed of (a) 100 pts. wt. rubbery polymer (EPDM), (b) 5 to 30 pts. wt. inorganic filler and/or polymer having acidic functionality, (c) vulcanising agent (sulfur) and (d) vulcanising promoter.

An object of the invention is to provide the use of a rubber composition for forming an inner tube of a rubber hose for a fuel system which makes it possible to lessen the deposition of fatty acid zinc salts and prevent common rail jet nozzles from clogging.

Fatty acid zinc salts are deposited when fatty acids react with zinc. Thus, studies were made on the origins of the fatty acids and the origins of zinc. As a result, the following origins were found out.

### [Origin of Fatty Acids]

Fatty acids such as stearic acid or related compounds thereof employed as processing auxiliaries in rubber compositions.

Fatty acids remaining in rubber polymers.

### [Origin of Zinc]

Zinc white (zinc oxide) essentially employed as a cure promoter in rubber compositions of the sulfur cure system.

Zinc components in pipes and joints made of brass (a copper-zinc alloy) which are employed in fuel circuits.

In the case where a rubber composition contains fatty acids of the origins as described above, zinc white reacts with the fatty acids to form fatty acid zinc salts in the course of producing an inner tube and a large amount of the unreacted fatty acids remain in the inner tube. After immersing in fuel, therefore, (insoluble) fatty acid zinc salts are scarcely extracted from the inner tube but the unreacted fatty acids are extracted from the inner tube. The thus extracted fatty acids react with zinc components in a fuel circuit and thus fatty acid zinc salts are deposited, thereby seemingly causing clogging in a jet nozzle of a common rail.

Based on this discussion, the present inventor has found out that the deposition of fatty acid zinc salts can be lessened by inhibiting the formation of the fatty acid zinc salts even in the presence of fatty acids and zinc, thus completing the invention.

Accordingly, the characteristic of the invention resides in using a magnesium compound or a calcium compound reacting (in preference to zinc) with fatty acids in a rubber composition forming an inner tube so as to lessen the formation of fatty acid zinc salts in the step of immersing in fuel.

Specific examples of the fatty acids or related compounds thereof include higher fatty acids such as stearic acid, ricinolic acid, palmitic acid and lauric acid; higher fatty acid salts such as barium stearate, zinc stearate and calcium stearate; higher fatty acid esters and so on. These compounds, which are usually employed as processing auxiliaries, may or may not be used in the invention.

Even in the case where a rubber composition contains stearic acid (i.e., one of the origins of fatty acids) or residual fatty acids (impurities), the magnesium compound or the calcium compound having a higher ionization degree would react in preference to zinc with the fatty acids in the production of an inner tube to form fatty acid magnesium salts or fatty acid calcium salts. In the case where the composition further contains zinc white, it also reacts with the fatty acid to form fatty acid zinc salts. Therefore, the amount of the unreacted fatty acids remaining in the inner tube is lowered compared with the case where neither magnesium compound nor calcium compound is employed. After immersing in fuel, fatty acid magnesium salts, fatty acid calcium salts and fatty acid zinc salts, which are insoluble, are scarcely extracted from the inner tube and only small amount of the unreacted fatty acids are extracted from the inner tube. Therefore, the amount of the deposited fatty acid zinc salts having been formed by the reactions of the extracted fatty acids with zinc components in a fuel circuit are also lessened, thereby seemingly preventing a jet nozzle in a common rail from clogging.

In the case where the rubber composition is a sulfur cure system essentially containing zinc white as a cure promoter, it is not essentially required to add fatty acids such as stearic acid (may or may not be added). Zinc white may be either zinc white commonly employed or active zinc white.

The inner layer of the inner tube described in JP-A-2003-287162 is formed by using H-NBR that has been peroxide-cured by adding zinc oxide and magnesium oxide as acid receivers. By adding zinc oxide and magnesium oxide as acid receivers, it is intended to form pseudo-crosslinkage between magnesium oxide and epoxy-crosslinkage type ACM in the outer layer of the inner tube to thereby enhance the adhesion strength. That is to say, the purpose in this case is different from the object of the present invention of lessening fatty acid zinc salts.

Next, individual constituents of the present invention will be described in greater detail. Unless otherwise noted, all composition units and ratios are expressed in mass.

### [Polymer in Rubber Composition]

The rubber composition used according to the present invention for forming an inner tube is as follows. To obtain fundamental properties such as fuel-permeability, fuel tolerance, ozone resistance, low-temperature performance and so on, according to the present invention NBR (acrylonitrile-butadiene rubber) or H-NBR (hydrogenated acrylonitrile-butadiene rubber) is employed. The content of AN (acrylonitrile) in NBR can be appropriately changed depending on the desired permeability of fuel such as gasoline. NBR or H-NBR may be used as a blend with other polymers so long as the purpose of the invention is not damaged thereby. Examples of such other polymers include ACM (acrylic rubber), NR (natural rubber), isoprene-based rubbers such as IR (isoprene rubber), conjugated diene-based rubbers such as BR (butadiene rubber), SBR (styrene-butadiene rubber) and CR (chloroprene rubber), PVC (polyvinyl chloride) and so on. The fundamental performance as described above can be improved by blending ACM or PVC from among these polymers.

### [Magnesium Compound or Calcium Compound]

Although the magnesium compound or the calcium compound is not particularly restricted, magnesium oxide or calcium oxide is preferred and magnesium oxide is more preferable. Highly active magnesium oxide is most preferable. The content of magnesium oxide or calcium oxide is preferably from 1 to 8 parts, more preferably from 1 to 5 parts, per 100 parts of the polymer.

### [Active Zinc White]

Active zinc white is zinc white having a relatively large surface area which is produced by a so-called German method falling within the category of wet methods. More specifically, it is produced by adding a basic solution (for example, a soda ash solution) to an aqueous solution of zinc sulfate or zinc chloride, washing the thus obtained white basic precipitate of zinc carbonate with water and then drying or calcining. The content of the active zinc white preferably ranges from 1 to 5 parts, more preferably from 2 to 3 parts, per 100 parts of the polymer.

### [Other Components]

It is preferred that the rubber composition further contains a filler. Although the filler is not particularly restricted, examples thereof include fibrous fillers such as glass fiber and aramid fiber and non-fibrous fillers such as talc, mica, wollastonite, zeolite, clay, silica and graphite. It is particularly preferred to use a plate type filler such as talc or mica. In addition, it may contain other additives such as a rubber reinforcing agent, a plasticizer, a softening agent, an antioxidant, a cure promoter, an organic peroxide, a crosslinking aid, a coloring agent, a dispersant or a flame retardant so long as the purpose of the invention is not damaged thereby.

In the invention, the rubber composition for the outer coating of the rubber hose is neither particularly restricted nor specified. Accordingly, the outer coating may be formed by using a rubber composition appropriate for achieving characteristics commonly desired in the art such as the ozone resistance and low-temperature performance.

### [Advantage of the Invention]

According to the present invention, the deposition of fatty acid zinc salts can be lessened and thus a jet nozzle in a common rail can be prevented from clogging.

### BRIEF DESCRIPTION OF THE DRAWING

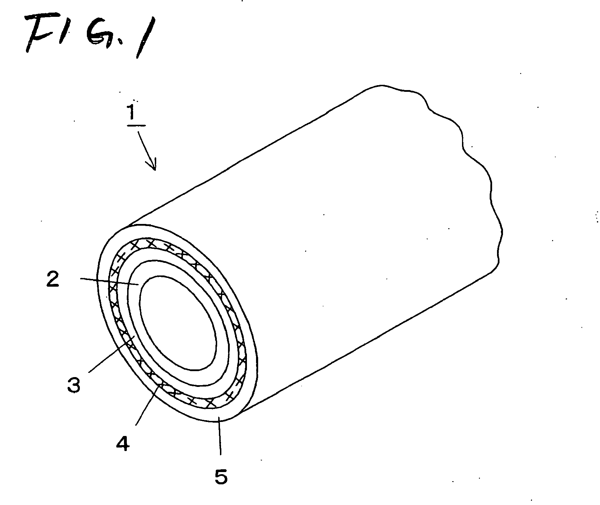

Fig. 1 is a perspective view showing a rubber hose for a fuel system of the embodiment.

### DETAILED DESCRIPTION OF THE PREFERRED EMBODIMENTS

Fig. 1 shows a rubber hose 1 for a fuel system provided with an inner tube 2 made of a rubber composition as will be described hereinafter, an intermediate layer 3 made of an epichlorohydrin rubber, a fiber-reinforced layer 4 formed by weaving fiber cords made of PET or the like, and an outer coating made of an epichlorohydrin rubber. To lessen the formation of fatty acid zinc salts in the step of immersing in fuel, a magnesium compound or a calcium compound reacting in preference to zinc with fatty acids is added to the rubber composition forming the inner tube 2. In the case where the rubber composition is a sulfur cure system essentially containing zinc white as a cure promoter, it is not essentially required to add fatty acids such as stearic acid.

### [Examples]

To preliminarily check Examples, the following test was carried out.

### [Deposit from Single Polymer]

Each of the 3 types of H-NBR polymers listed in Table 1, which were employed in EXAMPLE 1, was subjected to a deposition test and the presence or absence of deposit and the amounts thereof were examined. More specifically speaking, small pieces (2x10x10 mm) of each single polymer were prepared. A 18 g portion of these pieces was immersed in 75 ml of diesel oil (TD99-21) alone, while another portion thereof was immersed in 75 ml of diesel oil (TD99-21) together with a brass plate. After keeping these samples in a thermostat at 80°C for 3 days, each diesel oil was introduced into a measuring tube and centrifuged (1000 rpm x 30 min). Then, the deposit (precipitate) was separated and the volume (vol%) thereof was measured with the scale of the measuring tube. As Table 1 shows, a small amount of a deposit (composition unknown) was formed even in the case of immersing each single polymer in the diesel oil alone. In the case of immersing each single polymer in the diesel oil together with the brass plate, a small amount of fatty acid zinc salts were deposited.

**[Table 1]**

| | Diesel oil | Diesel oil |
|---|---|---|
| | alone | Cu+Zn (brass) |
| H-NBR AN: 44: hydrogenation rate | 0.07≥ | 0.07≥ |
| 90% (ZEON CO.: Zetpol 1020) | Not measured | Fatty acid Zn |
| H-NBR Ain:44: hydrogenation rate | 0.07 | 0.07 |
| 95% (ZEON CO.: Zetpol 1010) | - | Fatty acid Zn |
| H-NBR AN: 44: hydrogenation rate | 0.07≥ | 0.07≥ |
| 99% (ZEON CO.: Zetpol 1000L) | Not measured | Fatty acid Zn |

### [EXAMPLE 1]

In EXAMPLE 1, rubber compositions of the sulfur cure system were employed. The rubber compositions of EXAMPLE 1 (1-1 to 1-13) and COMPARATIVE EXAMPLE 1 listed in the following Tables 2 and 3 were prepared by kneading. From each rubber composition, a test plate of 2 mm in thickness was prepared and cured. Then each test piece was subjected to the following measurements. Tables 2 and 3 summarize the results too.
1. Mooney scorch: The scorch (initial cure) time of uncured rubber was measured with a Mooney viscometer.
2. Curast: The cure time (T90) at the molding temperature and the MH indicating the rigidity (crosslinkage density) at the curing were determined.
3. Properties in original state: The type A durometer hardness (HS), tensile strength (TB), elongation (EB) and 100% modulus (M100) of a cured test plate were determined.
4. Fuel immersion test: Small pieces (2x10x10 mm) of a cured test plate were prepared. A 18 g portion of these pieces was immersed in 75 ml of diesel oil (TD99-21) together with a brass plate. After keeping the sample in a thermostat at 80°C for 3 days, each diesel oils was introduced into a measuring tube and centrifuged (1000 rpm x 30 min). Thus, the deposit (precipitate) was separated and the volume (vol%) was measured with the scale of the measuring tube.

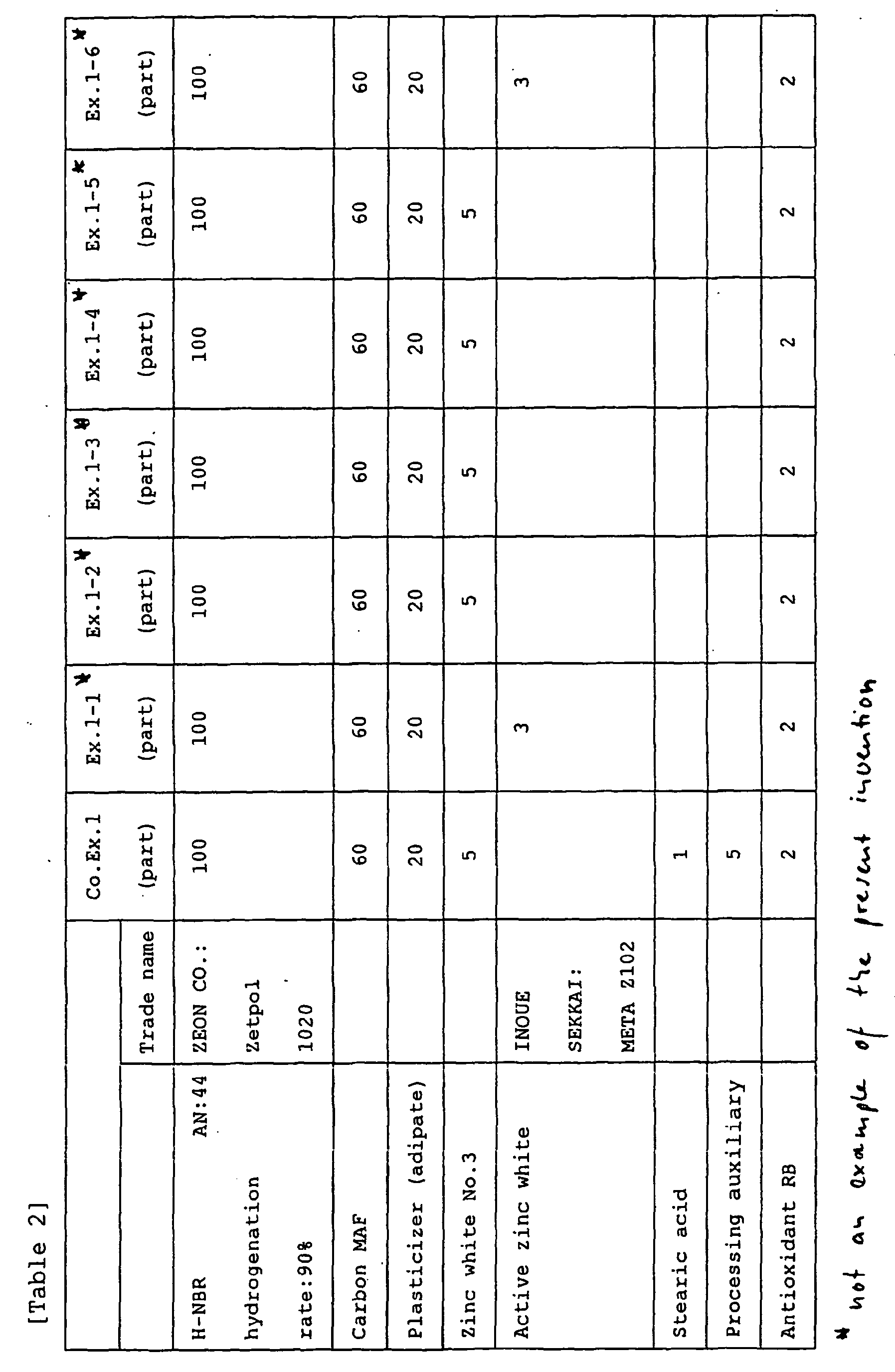

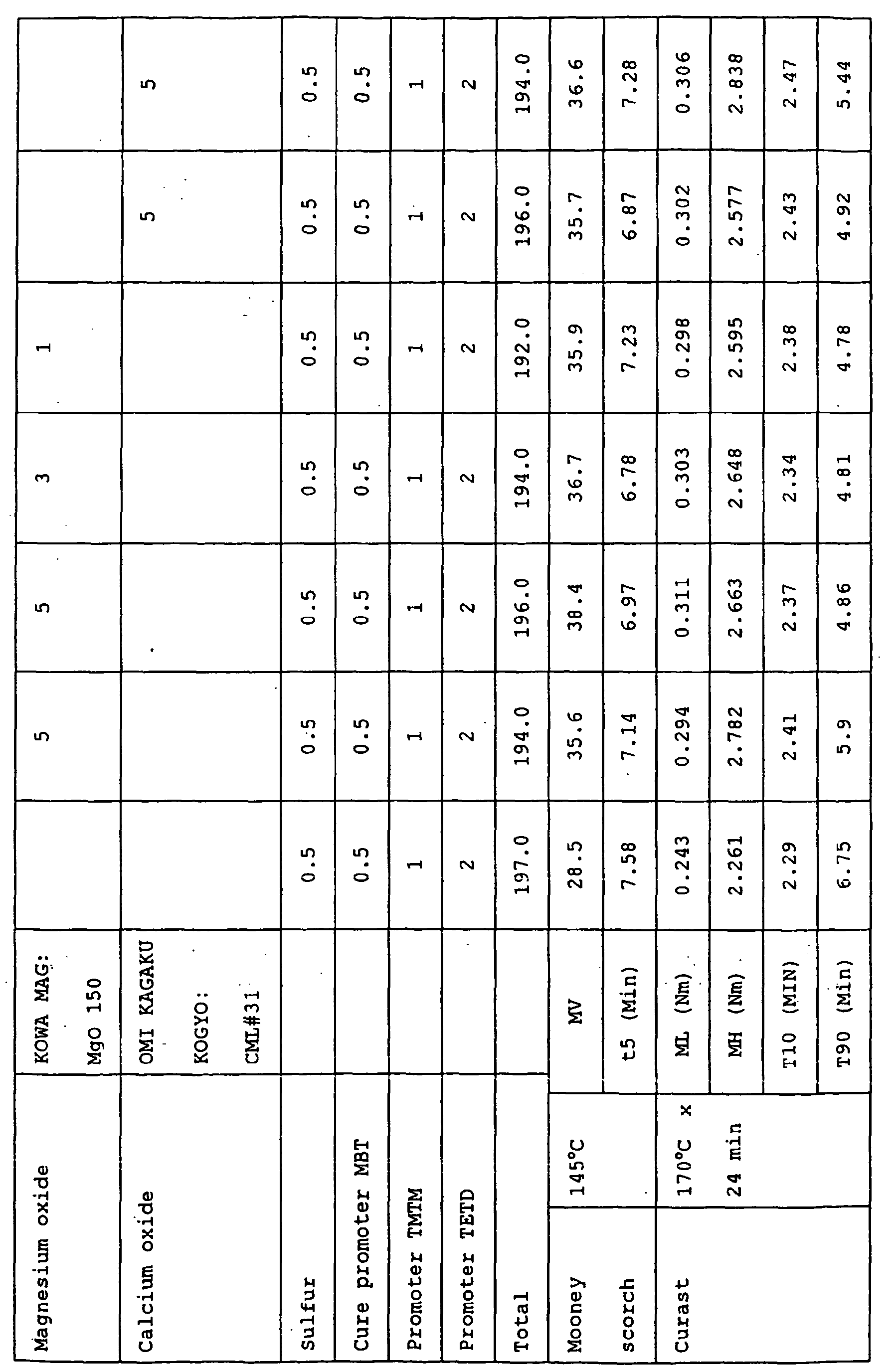

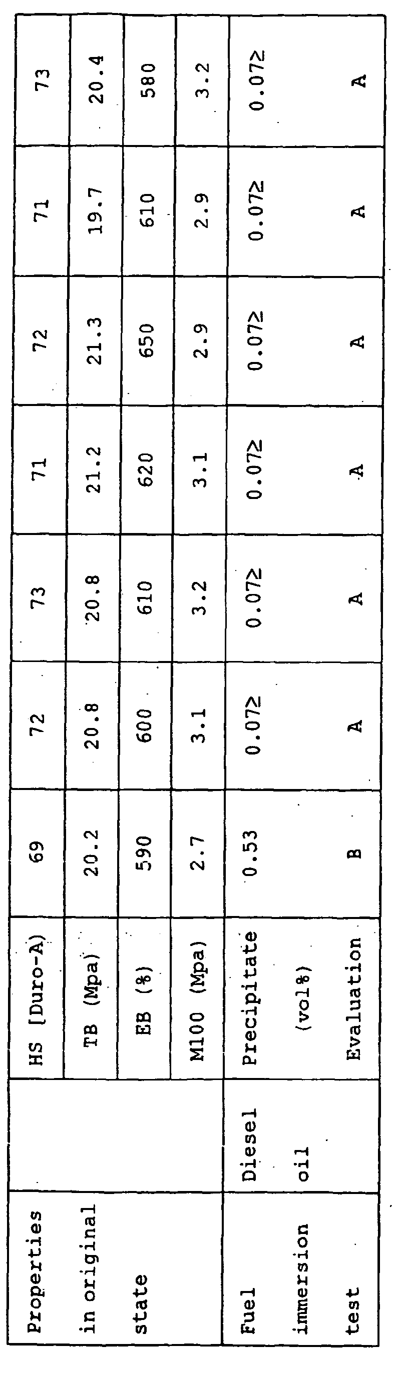

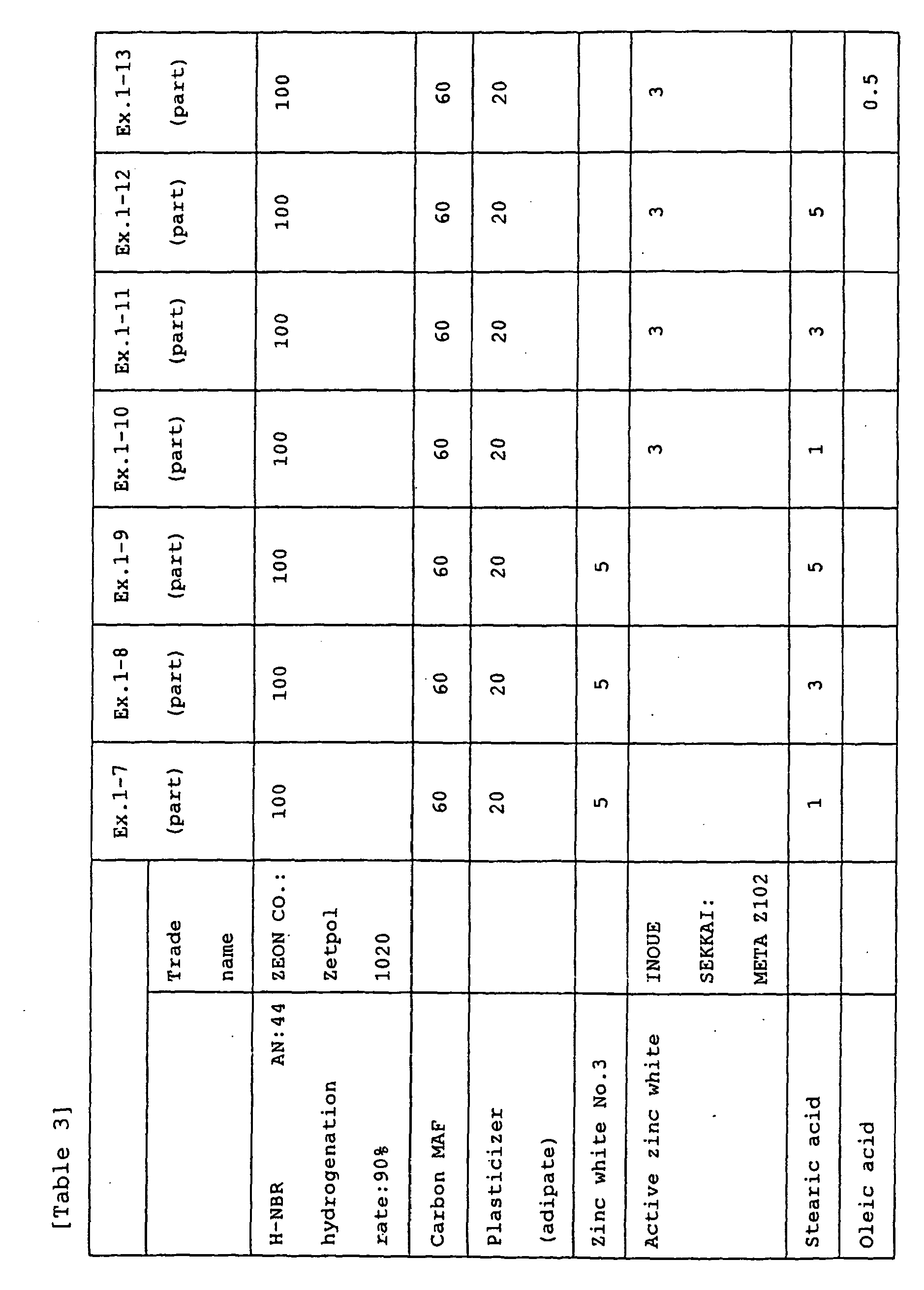

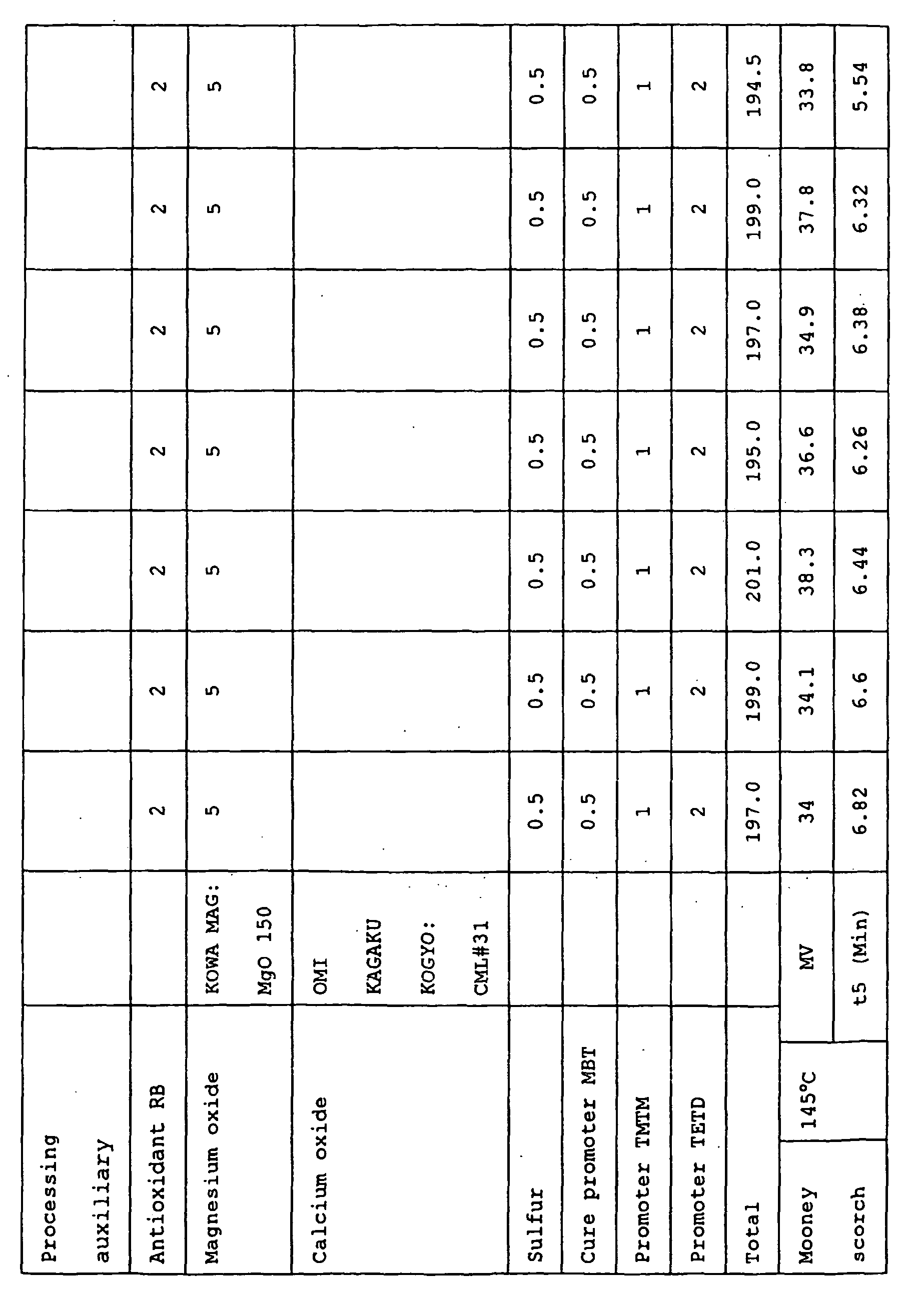

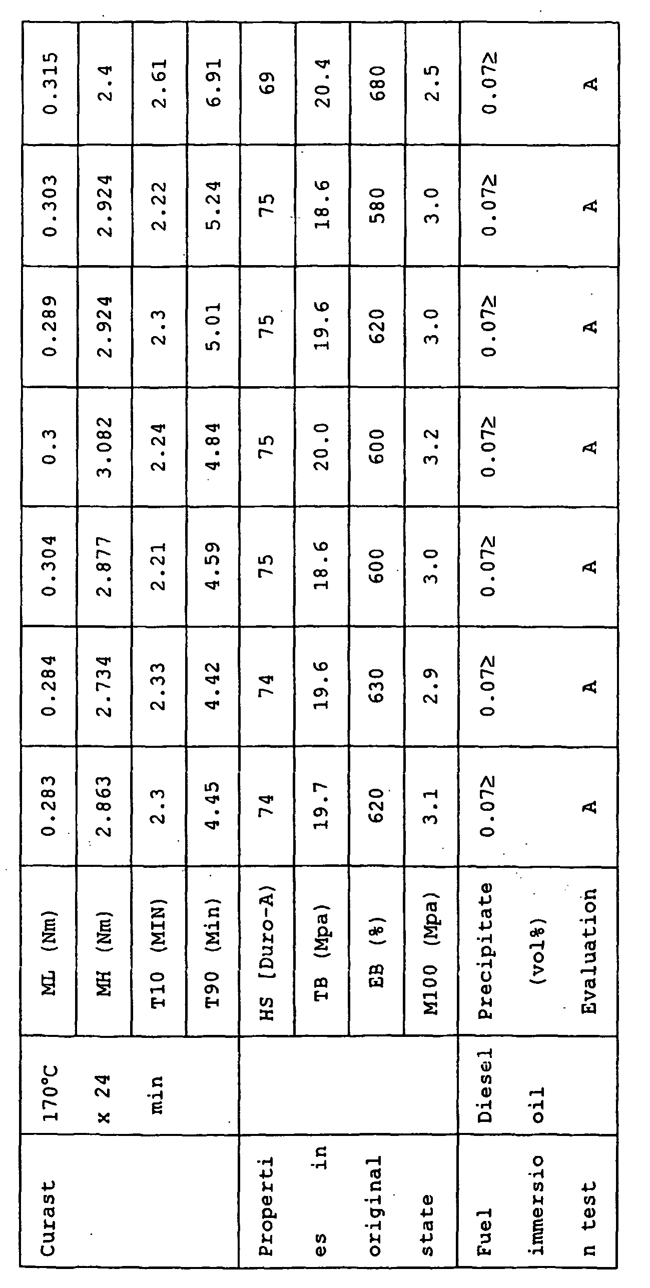

As Table 2 indicates, much fatty acid zinc salts were precipitated in COMPARATIVE EXAMPLE 1 wherein stearic acid was added but neither magnesium oxide nor calcium compound was added. In contrast, only an extremely small amount of precipitate was observed in each of EXAMPLES 1-1 to 1-6, which are not examples of the present invention, wherein magnesium oxide or calcium oxide was added without using stearic acid. In EXAMPLES 1-1 to 1-6, no significant difference or problem was observed in Mooney scorch, curast and properties in the original state. Namely, no undesirable effect was observed by the addition of magnesium oxide or calcium oxide.

As Table 3 indicates, only an extremely small amount of precipitate was observed in each of EXAMPLES 1-7 to 1-13 wherein stearic acid or oleic acid was added and magnesium oxide was also added. In EXAMPLES 1-7 to 1-13, no significant difference or problem was observed in Mooney scorch, curast and properties in the original state. Namely, no undesirable effect was observed by the addition of magnesium oxide.

The present invention is not construed as being restricted to the embodiments as described above but various changes may be made without departing from the scope of the invention, as claimed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. Use of a rubber composition for forming an inner tube (2) of a rubber hose (1) for a fuel system, wherein the rubber composition contains fatty acids and a magnesium compound or a calcium compound reacting with said fatty acids to thereby lessen the formation of fatty acid zinc salts in the step of immersing in fuel, wherein the main polymer in the rubber composition is NBR or H-NBR, and
wherein the rubber composition is a sulfur cure system essentially containing zinc white as a cure promoter.

2. The use according to claim 1, wherein magnesium oxide or calcium oxide is contained respectively as the magnesium compound or the calcium compound.

3. The use according to claim 2, wherein the content of magnesium oxide or calcium oxide is from 1 to 8 parts per 100 parts of the polymer in the rubber composition.

4. The use according to claim 2 wherein the content of magnesium oxide or calcium oxide is from 1 to 5 parts per 100 parts of the polymer in the rubber composition.

5. The use according to claim 1, wherein highly active magnesium oxide is contained in the rubber composition.

6. The use according to anyone of claims 1 to 5, wherein the zinc white is an active zinc white and is contained in a range from 1 to 5 parts per 100 parts of the polymer.

7. The use according to anyone of claims 1 to 5, wherein the zinc white is an active zinc white and is contained in a range from 2 to 3 parts per 100 parts of the polymer.

8. The use according to any one of claims 1 to 7, wherein the rubber composition further contains a filler.

## Patentansprüche

1. Verwendung einer Kautschukzusammensetzung zur Bildung eines Innenschlauchs (2) eines Kautschukschlauchs (1) für ein Kraftstoffsystem, wobei die Kautschukzusammensetzung Fettsäuren und eine Magnesiumverbindung oder eine Calciumverbindung enthält, die mit den Fettsäuren reagiert, um **dadurch** die Bildung von Fettsäure-Zinksalzen bei dem Schritt des Eintauchens in Kraftstoff zu vermindern, wobei das Hauptpolymer in der Kautschukzusammensetzung NBR oder H-NBR ist, und
wobei die Kautschukzusammensetzung ein Schwefel-Härtungssystem ist, das im Wesentlichen Zinkweiß als Härtungsbeschleuniger enthält.

2. Verwendung nach Anspruch 1, wobei Magnesiumoxid bzw. Calciumoxid als die Magnesiumverbindung oder die Calciumverbindung enthalten ist.

3. Verwendung nach Anspruch 2, wobei der Gehalt von Magnesiumoxid oder Calciumoxid 1 bis 8 Teile pro 100 Teile des Polymers in der Kautschukzusammensetzung beträgt.

4. Verwendung nach Anspruch 2, wobei der Gehalt von Magnesiumoxid oder Calciumoxid 1 bis 5 Teile pro 100 Teile des Polymers in der Kautschukzusammensetzung beträgt.

5. Verwendung nach Anspruch 1, wobei hochaktives Magnesiumoxid in der Kautschukzusammensetzung enthalten ist.

6. Verwendung nach einem der Ansprüche 1 bis 5, wobei das Zinkweiß ein aktives Zinkweiß ist und in einem Bereich von 1 bis 5 Teilen pro 100 Teile des Polymers enthalten ist.

7. Verwendung nach einem der Ansprüche 1 bis 5, wobei das Zinkweiß ein aktives Zinkweiß ist und in einem Bereich von 2 bis 3 Teilen pro 100 Teile des Polymers enthalten ist.

8. Verwendung nach einem der Ansprüche 1 bis 7, wobei die Kautschukzusammensetzung ferner einen Füllstoff enthält.

## Revendications

1. Utilisation d'une composition de caoutchouc pour former un tube interne (2) d'un tuyau en caoutchouc (1) pour un système de carburant, dans laquelle la composition de caoutchouc contient des acides gras et un composé de magnésium ou un composé de calcium qui réagit avec lesdits acides gras, pour réduire de la sorte la formation de sels de zinc et d'acides gras à l'étape d'immersion dans le carburant, dans laquelle le polymère principal de la composition de caoutchouc est le NBR ou le H-NBR, et
dans laquelle la composition de caoutchouc est un système de vulcanisation au soufre contenant du blanc de zinc comme promoteur de vulcanisation.

2. Utilisation selon la revendication 1, dans laquelle de l'oxyde de magnésium ou de l'oxyde de calcium est contenu, respectivement, comme composé de magnésium ou composé de calcium.

3. Utilisation selon la revendication 2, dans laquelle la teneur en oxyde de magnésium ou en oxyde de calcium se situe dans la plage de 1 à 8 parties pour 100 parties du polymère présent dans la composition de caoutchouc.

4. Utilisation selon la revendication 2, dans laquelle la teneur en oxyde de magnésium ou en oxyde de calcium se situe dans la plage de 1 à 5 parties pour 100 parties du polymère présent dans la composition de caoutchouc.

5. Utilisation selon la revendication 1, dans laquelle de l'oxyde de magnésium hautement actif est contenu dans la composition de caoutchouc.

6. Utilisation selon l'une quelconque des revendications 1 à 5, dans laquelle le blanc de zinc est un blanc de zinc actif, qui est contenu dans la plage de 1 à 5 parties pour 100 parties du polymère.

7. Utilisation selon l'une quelconque des revendications 1 à 5, dans laquelle le blanc de zinc est un blanc de zinc actif, qui est contenu dans la plage de 2 à 3 parties pour 100 parties du polymère.

8. Utilisation selon l'une quelconque des revendications 1 à 7, dans laquelle la composition de caoutchouc contient en outre une charge.
